# EUROPÄISCHE PATENTSCHRIFT

(11) **EP 0 674 122 B1**
(45) Veröffentlichungstag und Bekanntmachung des Hinweises auf die Patenterteilung: **01.07.1998**
(21) Anmeldenummer: 95104107.8
(22) Anmeldetag: 21.03.1995
(51) Int. Cl.: F16H 1/28

(54) **Getriebemotor**
Geared motor
Moto-réducteur

(30) Priorität: 26.03.1994 DE 4410401
(43) Veröffentlichungstag der Anmeldung: 27.09.1995
(73) Patentinhaber: Schnell, Ursula, 40472 Düsseldorf (DE)
(72) Erfinder: Schnell, Adolf, 40472 Düsseldorf (DE)
(74) Vertreter: Sparing - Röhl - Henseler Patentanwälte

(56) Entgegenhaltungen:
- EP-A- 0 388 207
- GB-A- 2 024 984

## Beschreibung

Die Erfindung betrifft einen Getriebemotor mit einem Antriebsmotor und einem hiervon antreibbaren, in einem Gehäuse angeordneten Wolfrom-Planetengetriebe, das einen Planetenträger, zwei hiervon getragene Planetenräder und ein gehäusefestes und ein sich drehendes Hohlrad besitzt, die axial hintereinander angeordnet sind.

Handgetriebe dienen bei Roboterapplikationen zum Bewegen von Werkzeugen beispielsweise zum Greifen, Schweißen, Entgraten, Auftragen von Klebstoff etc. um eine Drehachse und um eine hierzu senkrechte Schwenkachse entsprechend einer Bewegung der menschlichen Hand. Gegebenenfalls ist eine Überlastkupplung zwischen Werkzeug und Handgetriebe angeordnet, die im Normalbetrieb eine starre Verbindung zwischen Werkzeug und Handgetriebe gewährleistet, im Kollisionsfall aber eine flexible Verbindung zwischen beiden bewirket. Zur Versorgung von Werkzeugen bzw. Überlastkupplung sind elektrische und/oder hydraulische oder pneumatische Energie- oder sonstige Versorgungszuführungen etwa für aufzusprühenden Lack od.dgl. notwendig, die diesen Teilen von außen, d.h. ungeschützt, zugeführt werden. Gegebenenfalls wäre es auch wünschenswert, ein Werkzeug anzutreiben, ohne daß man das Handgetriebe mit dem zusätzlichen Gewicht eines Motors für das Werkzeug belastet. Dies würde aber eine Durchführung durch das Handgetriebe erfordern.

Aufgabe der Erfindung ist es, einen Getriebemotor zu schaffen, der eine Durchführung aufweist.

Diese Aufgabe wird dadurch gelöst, daß eine durchgehende Hohlwelle vorgesehen ist, wobei zwischen dem Gehäuse und der Hohlwelle konzentrisch zu letzterer das Wolfrom-Planetengetriebe angeordnet ist, dessen Planetenträger um die Hohlwelle drehbar gelagert ist, dessen Hohl räder mit beiden Planetenrädern in Eingriff stehen und dessen sich drehendes Hohlrad den Abtrieb bildet.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt teilweise schematisiert ausschnittweise und teilweise im Schnitt ein Handgetriebe für einen Roboterarm mit einer ersten Ausführungsform eines Getriebemotors.

Fig. 2 zeigt zwei weitere Ausführungsformen eines Getriebemotors ausschnittweise und teilweise im Schnitt sowie teilweise schematisiert.

Fig. 3 zeigt teilweise schematisiert ein Hubgetriebe.

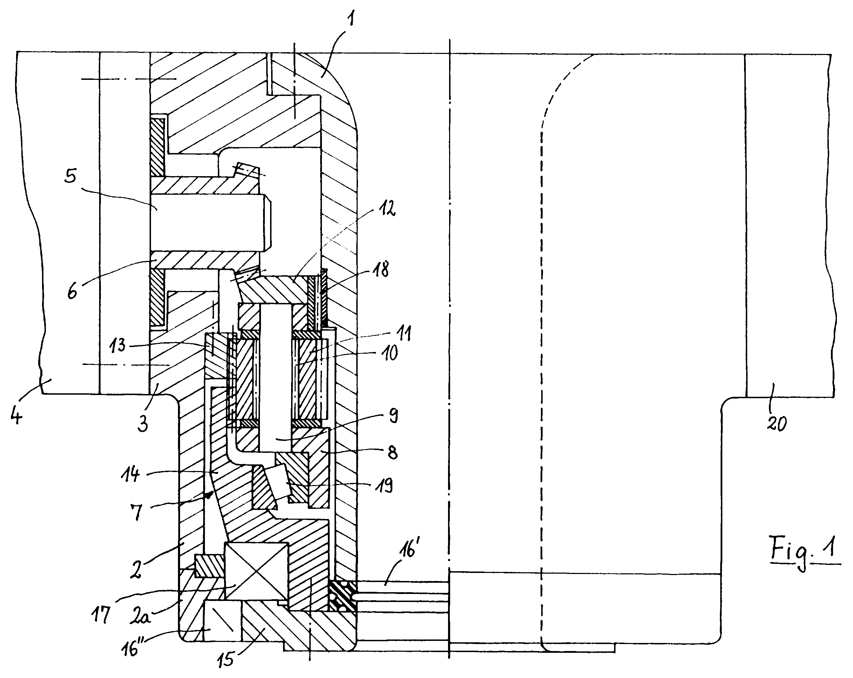

Das zweiachsige Handgetriebe für einen Roboterarm gemäß Fig. 1 umfaßt eine als Drehachse für das Handgetriebe dienende Hohlwelle 1, die mit einem im wesentlichen hohlzylindrischen oder ringförmigen, einen Deckelring 2a aufweisenden Gehäuse 2 verbunden ist, so daß die Hohlwelle 1 gegenüber dem Gehäuse 2 feststehend ist. Das Gehäuse 2 weist seitlich einen Flansch 3 zum Anflanschen eines Antriebsmotors 4 auf. Der Antriebsmotor 4 besitzt eine Antriebswelle 5, auf dem ein Kegelritzel 6 befestigt ist.

Das Kegelritzel 6 dient zum Antreiben eines fünfrädrigen oder Wolfrom-Planetengetriebes 7. Dieses schrägverzahnte und spielarme Planetengetriebe 7 umfaßt einen Planetenträger 8, der zwei um 180° versetzte, koaxial zur Hohlwelle 1 sich erstreckende Planetenradbolzen 9 aufnimmt, auf denen über Nadellager 10 Planetenräder 11 gelagert sind. Der Planetenträger 8 ist an der dem Kegelritzel 6 zugewandten Seite mit einem Kegelrad 12 versehen, das mit dem Kegelritzel 6 kämmt, so daß der Planetenträger 8 vom Antriebsmotor 4 angetrieben ist.

Das Gehäuse 2 nimmt ein damit fest verbundenes Hohlrad 13 auf, benachbart und koaxial zu dem ein Abtriebshohlrad 14 angeordnet ist, die beide mit den Planetenrädern 11 kämmen.

Das Abtriebshohlrad 14 trägt an einer Stirnseite des Handgetriebes befindlich einen Aufnahmeflansch 15 zum Befestigen beispielsweise eines Werkzeugs oder eines Überlastbegrenzers. Zwischen dem Aufnahmeflansch 15 und der Hohlwelle 1 bzw. dem Gehäuse 2 sind Dichtungen 16', 16" angebracht. Ferner ist das Abtriebshohlrad 14 im Gehäuse 2 spielfrei etwa über eine axial und radial wirkende Lageranordnung 17 gelagert.

Der Planetenträger 8 ist im Bereich der dem Kegelrad zugewandten Stirnseite über ein Nadellager 18 gegenüber der Hohlwelle 1 gelagert, während zwischen seiner dem Aufnahmeflansch 15 zugekehrten Stirnseite und dem Abtriebshohlrad 14 ein Kegelrollenlager 19 angeordnet ist.

Diese Konstruktion ist äußerst kompakt und läßt einen Durchtritt mit großem Durchmesser bei vergleichsweise geringem Gesamtdurchmesser und genügend großem Abtriebsdrehmoment, wobei das fünfrädrige oder Wolfrom-Planetengetriebe 7 als zusammengesetztes Planetengetriebe eine große Untersetzung von beispielsweise 100:1 besitzt und damit eine äußerst genaue Positionierung ermöglicht.

Anstelle eines direkt angekoppelten Antriebsmotors 4 kann beispielsweise auch ein über Zahnriemen angekoppelter Antriebsmotor 4 verwendet werden, wobei dann die Antriebswelle 5 mit einem Zahnriemenrad verbunden ist.

Ein Schwenkantrieb 20 für die Schwenkachse des Handgelenks in Form eines Antriebsmotors oder eines Zahnriementriebs greift am Gehäuse 2 an, um dieses um eine Achse, etwa um die Achse der Antriebswelle 5 oder eine hierzu parallele Achse, senkrecht zur Achse der Hohlwelle 1 hin- und herzuschwenken.

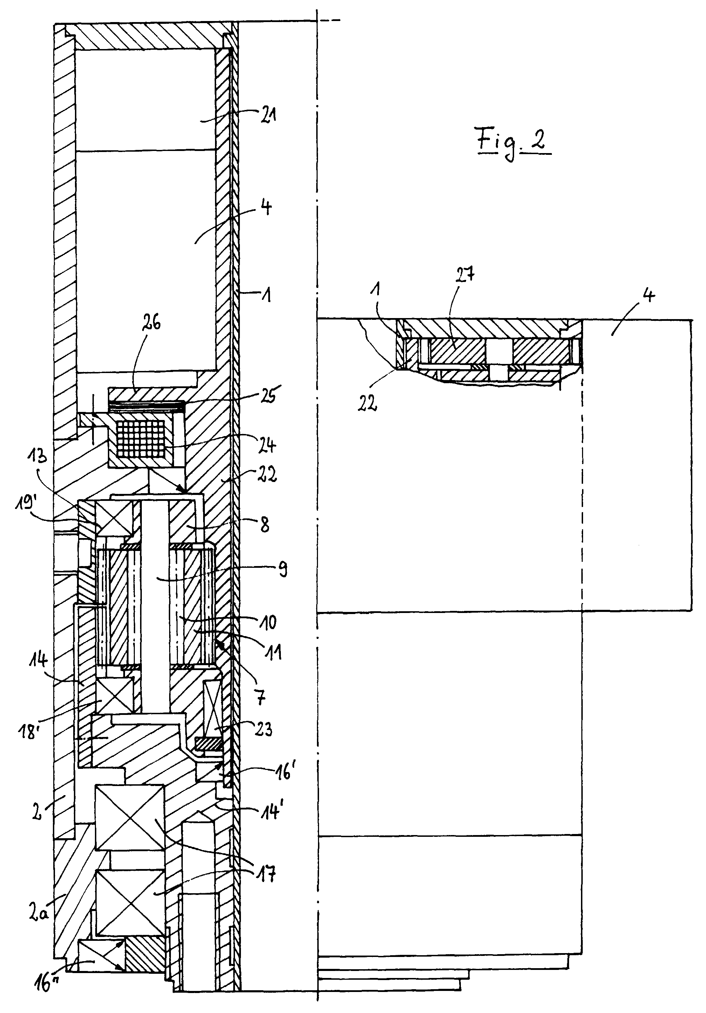

Bei der in Fig. 2 links dargestellten Ausführungsform ist der Antriebsmotor 4 ein AC-Servo-Ringmotor mit einem Resolver 21, die vom Gehäuse 2 aufgenommen sind. Der Resolver 21 gibt Signale entsprechend dem Verdrehwinkel und der Drehzahl des Antriebsmotors 4 an eine Stellelektronik (nicht dargestellt). Der Antriebsmotor 4 treibt ein gegenüber der Hohlwelle 1 etwa über Nadellager (nicht dargestellt) gelagertes Hohlritzel 22 an, das seinerseits mit den Planetenrädern 11 in Eingriff steht und auf diese Weise das fünfrädrige oder Wolfrom-Planetengetriebe 7 antreibt.

Der Planetenträger 8 ist hierbei über zwei Kugellager 18', 19' gegenüber den beiden Hohlrädern 13, 14 gelagert und über ein weiteres Lager 23 gegenüber dem Hohlritzel 22 gelagert, wobei das Abtriebshohlrad 14 einen getrennt davon ausgebildeten, aber fest damit etwa durch Schrauben verbundenen Abtriebswellenabschnitt 14' aufweist, an dem ein abtriebsseitiger Flansch od.dgl. befestigbar ist.

Zusätzlich ist eine Ruhestrom-Haltebremse 24 vorgesehen, deren Bremsbelag 25 mit einem entsprechenden Gegenfläche an einem Ring 26 des Hohlritzels 22 in Eingriff bringbar ist. Das Bremsmoment der Ruhestrom-Haltebremse 24 übersteigt zweckmäßigerweise das Nennmoment des Antriebsmotors 4 um ein mehrfaches, damit sie als Sicherheitsbremse dienen kann.

Wie rechts in Fig. 2 dargestellt, kann zum Erzielen einer axial verkürzten Konstruktion der Antriebsmotor 4 auch außen auf dem Gehäuse 2 angeordnet und über eine entsprechend Kopplung 27 mit dem Hohlritzel 22 bzw. dem Planetenträger 8 gekoppelt sein.

Wenn sich die Hohlwelle 1 mitdrehen soll, ist sie entsprechend mit dem Abtriebshohlrad 14 zu koppeln.

Anstelle von zwei Planetenrädern 11 kann das Wolfrom-Planetengetriebe 7 auch mehr Planetenräder 11, etwa drei oder vier, aufweisen.

Die in Fig. 1 und 2 dargestellten Ausführungformen bilden Winkelaufsteckgetriebe, die als solche vielseitig, d.h. nicht nur bei Handgetrieben einsetzbar sind.

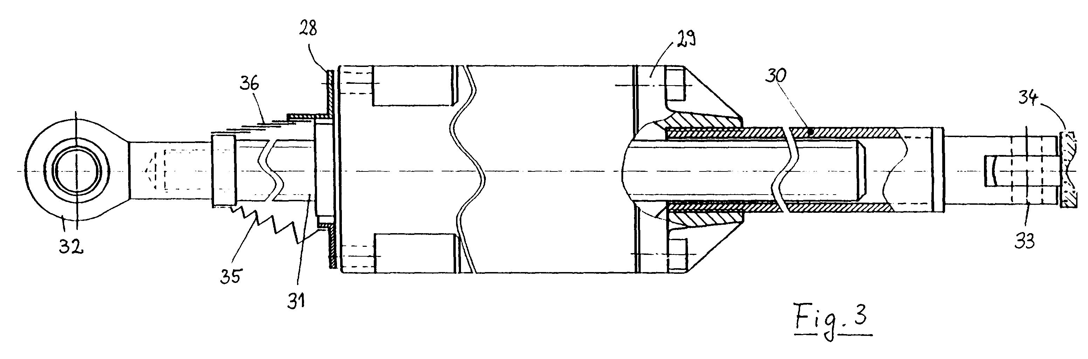

Fig. 3 zeigt einen Getriebemotor im Einsatz als Hubgetriebe, an dessen Gehäuse 2 stirnseitig ein Abdeckblech 28 bzw. ein Flansch 29 angeflanscht ist, wobei der Flansch 29 ein Stütz- und Schutzrohr 30 aufnimmt. Der Getriebemotor dient hierbei zum Antrieb eines Kugelrollspindeltriebs, dessen Kugelrollspindel 31 stehend, d.h. nicht drehend von der gehäusefesten Hohlwelle 1 aufgenommen wird, während als Spindelmutter das Abtriebshohlrad 14 oder die mitlaufende Hohlwelle 1 dient. An einem Ende ist die Kugelrollspindel 31 mit einem Gabel- oder Kugelkopf 32 und am anderen Ende mit einer Gabel 33 für einen Gabelkopf 34 versehen. Die Gabel 33 dient zugleich als Drehmomentstütze (Verdrehsicherung). Zwischen dem Flansch 28 und dem Gabel- oder Kugelkopf 32 ist eine Abdeckung in Form eines Faltenbalgs 35 oder einer Spiralfeder 36 vorgesehen. Am Stütz- und Schutzrohr 30 kann ein (nicht dargestellter) Endschalter für die Sicherung der Hubendlagen der Kugelrollspindel 31 vorgesehen sein.

Die Hohlwelle 1 kann auch als Profil-Hohlwelle zur Aufnahme von Vielkeil- oder Polygonwellen, die linear beweglich sind, ausgebildet sein. Auch pneumatische oder hydraulische Zylinder oder Einsteck-, Voll- oder Sonderwellen kann die Hohlwelle 1 entsprechend dem jeweiligen Anwendungszweck aufnehmen.

Der Getriebemotor erlaubt bei platzsparendem Aufbau und geringem Gewicht sowie hoher Positioniergenauigkeit bei sehr hohen Stellkräften einen großen, behinderungsfreien Hohlwellendurchgang ohne Störkanten bei mitlaufender oder stehender Hohlwelle 1, durch die hindurch eine Energie-, Steuerkabel- und/oder Materialzuführung erfolgen kann.

## Patentansprüche

1. Getriebemotor mit einem Antriebsmotor (4) und einem hiervon antreibbaren, in einem Gehäuse (2) angeordneten Wolfrom-Planetengetriebe (7), das einen Planetenträger (8), mehrere hiervon getragene Planetenräder (11) und ein gehäusefestes und ein sich drehendes Hohlrad (13, 14) besitzt, die axial hintereinander angeordnet sind, dadurch **gekennzeichnet**, daß eine durchgehende Hohlwelle (1) vorgesehen ist, wobei zwischen dem Gehäuse (2) und der Hohlwelle (1) konzentrisch zu letzterer das Wolfrom-Planetengetriebe (7) angeordnet ist, dessen Planetenträger (8) um die Hohlwelle (1) drehbar gelagert ist, dessen Hohlräder (13, 14) mit beiden Planetenrädern (11) in Eingriff stehen und dessen sich drehendes Hohlrad (14) den Abtrieb bildet.

2. Getriebemotor nach Anspruch 1, dadurch gekennzeichnet, daß das Planetengetriebe (7) über ein mit dessen Planetenrädern (11) in Eingriff stehendes Hohlritzel (22) antreibbar ist.

3. Getriebemotor nach Anspruch 1, dadurch gekennzeichnet, daß das Planetengetriebe (7) über ein auf dessen Planetenträger (8) befindliches, von einem Ritzel (6) angetriebenes Zahnrad (12) antreibbar ist.

4. Getriebemotor nach Anspruch 1, dadurch gekennzeichnet, daß das Ritzel (6) ein Kegelritzel und das Zahnrad (12) ein Kegelrad ist.

5. Getriebemotor nach einem der Ansprüche 1 bis 4, dadurch gekennzeichnet, daß das sich drehende Hohlrad (14) gegenüber dem Gehäuse (2) über eine axial und radial wirkende Lageranordnung (17) gelagert ist.

6. Getriebemotor nach einem der Ansprüche 1 bis 5, dadurch gekennzeichnet, daß der Antriebsmotor (4) ein Servomotor ist.

7. Getriebemotor nach einem der Ansprüche 1 bis 6, dadurch gekennzeichnet, daß der Antriebsmotor (4) im Gehäuse (2) koaxial zur Hohlwelle (1) als Ringmotor angeordnet ist.

8. Getriebemotor nach einem der Ansprüche 1 bis 6, dadurch gekennzeichnet, daß der Antriebsmotor (4) außerhalb des Gehäuses (2) koaxial zur Hohlwelle (1) als Ringmotor angeordnet ist.

9. Getriebemotor nach einem der Ansprüche 1 bis 8, dadurch gedaß dem Antriebsmotor (4) ein Resolver (21) zur Abgabe von dem Verdrehwinkel und der Drehzahl abhängigen Signalen nachgeschaltet ist.

10. Getriebemotor nach einem der Ansprüche 1 bis 9, dadurch gekennzeichnet, daß eine Ruhestrom-Haltebremse (24) vorgesehen ist.

11. Getriebemotor nach Anspruch 10, dadurch gekennzeichnet, daß das Bremsmoment der Ruhestrom-Haltebremse (24) das Nennmoment des Antriebsmotors (4) übersteigt.

12. Getriebemotor nach einem der Ansprüche 1 bis 11, dadurch gekennzeichnet, daß die Hohlwelle (1) gehäusefest ist.

13. Getriebemotor nach einem der Ansprüche 1 bis 11, dadurch gekennzeichnet, daß die Hohlwelle (1) mit dem sich drehenden Hohlrad (14) mitlaufend ist.

14. Getriebemotor nach einem der Ansprüche 1 bis 11, dadurch gekennzeichnet, daß die Hohlwelle (1) als Antriebswelle für das Planetengetriebe (7) mit dem Antriebsmotor (4) gekoppelt ist.

15. Getriebemotor nach einem der Ansprüche 1 bis 14, dadurch gekennzeichnet, daß das Gehäuse (2) zylindrisch ist.

16. Getriebemotor nach Anspruch 15, dadurch gekennzeichnet, daß das Gehäuse (2) als Teil eines Handgetriebes um eine Achse senkrecht zu seiner Zylinderachse schwenkbar ist und stirnseitig einen Aufnahmeflansch (15) aufweist, der gegenüber den Gehäuse (2) um dessen Zylinderachse drehbar ist und an dem sich drehenden Hohlrad (14) befestigt ist, während die Hohlwelle (1) gehäusefest ist.

17. Getriebemotor nach einem der Ansprüche 1 bis 15, dadurch gekennzeichnet, daß die Hohlwelle (1) eine durchgehende Kugelrollspindel (31) aufnimmt und das sich drehende Hohlrad (14) als Spindelmutter ausgebildet ist.

18. Getriebemotor nach einem der Ansprüche 1 bis 15, dadurch gekennzeichnet, daß die Hohlwelle (1) eine Profilhohlwelle ist.

## Claims

1. Geared motor with a drive motor (4) and wolfram planetary gearing (11) able to be driven thereby and located in a housing (2), which gearing (7) comprises a satellite carrier (8), a plurality of planet wheels (11) carried thereby and an annular gear (13) integral with the housing and a rotating annular gear (14), which are arranged axially one behind the other, characterised in that a continuous hollow shaft (1) is provided, the wolfram planetary gearing (7) being located between the housing (2) and the hollow shaft (1) concentric with respect to the latter, whereof the satellite carrier (8) is mounted to rotate about the hollow shaft (1), whereof the annular gears (13, 14) mesh with two planet wheels (11) and whereof the rotating annular gear (14) forms the output.

2. Geared motor according to Claim 1, characterised in that the planetary gearing (7) can be driven by way of a hollow pinion (22) meshing with its planet wheels (11).

3. Geared motor according to Claim 1, characterised in that the planetary gearing (7) can be driven by way of a gear wheel (12) located on its satellite carrier (8) and driven by a pinion (6).

4. Geared motor according to Claim 1, characterised in that the pinion (6) is a bevel pinion and the gear wheel (12) is a bevel gear.

5. Geared motor according to one of Claims 1 to 4, characterised in that the rotating annular gear (14) is mounted by way of a bearing arrangement (17) acting axially and radially, with respect to the housing (2).

6. Geared motor according to one of Claims 1 to 5, characterised in that the drive motor (4) is a servo motor.

7. Geared motor according to one of Claims 1 to 6, characterised in that the drive motor (4) is arranged in the housing (2) coaxially with respect to the hollow shaft (1) as an annular motor.

8. Geared motor according to one of Claims 1 to 6, characterised in that the drive motor (4) is located outside the housing (2) coaxially with respect to the hollow shaft (1) as an annular motor.

9. Geared motor according to one of Claims 1 to 8, characterised in that the drive motor (4) is followed by a resolver (21) for emitting signals dependent on the torsion angle and the speed.

10. Geared motor according to one of Claims 1 to 9, characterised in that a closed circuit-blocking brake (24) is provided.

11. Geared motor according to Claim 10, characterised in that the braking torque of the closed circuit blocking brake (24) exceeds the nominal torque of the drive motor (4).

12. Geared motor according to one of Claims 1 to 11, characterised in that the hollow shaft (1) is integral with the housing.

13. Geared motor according to one of Claims 1 to 11, characterised in that the hollow shaft (1) follows the rotating annular gear (14).

14. Geared motor according to one of Claims 1 to 11, characterised in that the hollow shaft (1) as the drive shaft for the planetary gearing (7) is connected to the drive motor (4).

15. Geared motor according to one of Claims 1 to 14, characterised in that the housing (2) is cylindrical.

16. Geared motor according to Claim 15, characterised in that the housing (2) as part of hand gearing is able to tilt about an axis perpendicular to the axis of its cylinder and on the end face comprises a receiving flange (15), which with respect to the housing (2) is able to rotate about the axis of its cylinder and is attached to the rotating annular gear (14), whereas the hollow shaft (1) is integral with the housing.

17. Geared motor according to one of Claims 1 to 15, characterised in that the hollow shaft (1) receives a continuous ball rolling spindle (31) and the rotating annular gear (14) is constructed as a spindle nut.

18. Geared motor according to one of Claims 1 to 15, characterised in that the hollow shaft (1) is a profiled hollow shaft.

## Revendications

1. Moto-réducteur comportant un moteur d'entraînement (4) et, entraîné par celui-ci, un train planétaire à cinq roues du type "Wolfrom" (7) qui présente un porte-satellites (8), plusieurs roues satellites (11) supportées par ce dernier et une roue creuse (13, 14) intégrée au carter et rotative, ces roues étant disposées les unes derrière les autres en direction axiale, caractérisé par la présence d'un arbre creux continu (1), tandis que le train planétaire (7) est disposé entre le carter (2) et ledit arbre creux (1) concentriquement par rapport à ce dernier, le porte-satellites (8) étant monté de manière à tourner autour de l'arbre creux (1) dont les roues creuses (13, 14) sont en prise avec les deux roues satellites (11) et dont la roue creuse rotative (14) constitue la sortie dudit engrenage.

2. Moto-réducteur selon la revendication 1, caractérisé en ce que le train planétaire (7) peut être entraîné par un pignon creux (22) qui est en prise avec ses roues satellites (11).

3. Moto-réducteur selon la revendication 1, caractérisé en ce que le train planétaire (7) peut être entraîné par une roue dentée (12) se trouvant sur le porte-satellites (8), elle-même étant entraînée par un pignon (6).

4. Moto-réducteur selon la revendication 1, caractérisé en ce que le pignon (6) est un pignon conique et la roue dentée (12) une roue conique.

5. Moto-réducteur selon l'une des revendications 1 à 4, caractérisé en ce que la roue creuse rotative (14) est montée dans le carter (2) en s'appuyant sur un agencement de paliers (17) agissant axialement et radialement.

6. Moto-réducteur selon l'une des revendications 1 à 5, caractérisé en ce que le moteur d'entraînement (4) est un servomoteur.

7. Moto-réducteur selon l'une des revendications 1 à 6, caractérisé en ce que le moteur d'entraînement (4) est disposé dans le carter (2) coaxialement par rapport à l'arbre creux (1) en formant un moteur torique.

8. Moto-réducteur selon l'une des revendications 1 à 6, caractérisé en ce que le moteur d'entraînement (4) est disposé en forme de moteur torique, à l'extérieur du carter (2), coaxialement à l'arbre creux (1).

9. Moto-réducteur selon l'une des revendications 1 à 8, caractérisé en ce qu'à la suite du moteur d'entraînement (4) est monté un résolveur (21) destiné à émettre des signaux qui dépendent de l'angle de torsion et de la vitesse de rotation.

10. Moto-réducteur selon l'une des revendications 1 à 9, caractérisé par la présence d'un frein d'arrêt (24) à courant permanent.

11. Moto-réducteur selon la revendication 10, caractérisé en ce que le couple de freinage du frein (24) dépasse le couple nominal du moteur d'entraînement (4).

12. Moto-réducteur selon l'une des revendications 1 à 11, caractérisé en ce que l'arbre creux (1) est intégré au carter.

13. Moto-réducteur selon l'une des revendications 1 à 11, caractérisé en ce que l'arbre creux (1) tourne avec la roue creuse rotative (14).

14. Moto-réducteur selon l'une des revendications 1 à 11, caractérisé en ce que l'arbre creux (1) est accouplé au moteur d'entraînement (4) en constituant l'arbre d'entraînement du train planétaire (7).

15. Moto-réducteur selon l'une des revendications 1 à 14, caractérisé en ce que le carter (2) est cylindrique.

16. Moto-réducteur selon la revendication 15, caractérisé en ce que le carter (2), en tant que partie d'un mécanisme à usage manuel, peut basculer autour d'un axe perpendiculairement à son axe de cylindre et présente, du côté frontal, une bride de réception (15) qui est rotative par rapport au carter (2) autour de son axe de cylindre et sur laquelle est fixée une roue creuse rotative (14), alors que l'arbre creux (1) est intégré au carter.

17. Moto-réducteur selon l'une des revendications 1 à 15, caractérisé en ce que l'arbre creux (1) reçoit une tige filetée à billes (31) et la roue creuse (14) rotative est conformée de manière à servir d'écrou à cette tige.

18. Moto-réducteur selon l'une des revendications 1 à 15, caractérisé en ce que l'arbre creux(1) est un arbre creux profilé.
